# EUROPEAN PATENT APPLICATION

(11) **EP 1 443 387 A1**
(43) Date of publication of application: **04.08.2004**
(21) Application number: 03001737.0
(22) Date of filing: 27.01.2003
(51) Int. Cl.: G06F 3/033

(54) **Separable build-in mouse input device**

(71) Applicant: Uniwill Computer Corporation, Chung Li City, Tao Yuan Hsien (TW)
(72) Inventor: Yang, Yao-Chia, Lungtan Hsiang, Taoyuan Hsien, Taiwan (CN)
(74) Representative: Beck, Michael Rudolf

(57) **Abstract**

A separable build-in mouse input device, which combines with a common build-in mouse input device for a portable computer and an optical mouse module applying with the wireless transmission technique, equips in a portable computer via a link unit as a build-in mouse, or flip out as an isolated optical mouse. Applying with this device, the input selectivity for portable computer users in increased, and the convenience for conventional portable computer users of carrying a mouse to link with the portable computer instead is improved. In sum, this device is featured combining with the build-in input unit of a portable computer, or removing as an isolated optical mouse to a portable computer.

## Description

The present invention relates to a mouse cursor input device and, in particular, to a separable build-in mouse input device implementing wireless transmission technology, which is suitable for portable electronic information processing apparatus such as portable computers, Tablet PCs, electronic satchels, electronic books, and Web Pads.

Due to the rapid development of technology, the market lead by the semiconductor and information industries grows vigorously and continuously, thus brings about many changes on the application level. These changes not only result in technology achievements, but also improve the quality and the pattern of human lives. Various kinds of electronic consuming products, such as personal computers, mice, scanners, mobile phones, and PDAs are also affected, and people's requirements for these electronic products are thus stricter. While moving from the professional field into the general consuming market, various requirements for these electronic products, such as the concept of ergonomics design, has been conducted.

Most portable computers incorporate built-in touch pads, track balls, or track sticks as its mouse cursor input devices. These devices are designed to satisfy the requirements of portability and limited spaces of portable computers. However, when compared with conventional mice, these built-in mouse cursor input devices are not user-friendly to users. Although most portable computers provide external connectors for users to connect conventional mice, it is still inconvenient since the users have to bring extra mice and connect/disconnect the mice to/from the portable computers.

However, if one can implement mechanical design concepts to re-design a conventional mouse for portable computers into a separable one, then the mouse has more flexibility and can have different ways of usage depending on different occasions. For instance, the mouse can be combined into the portable computer when no stable and flat operation surface is available, and can be separated from the portable computer when a flat operation surface is available. Therefore, how to design a separable input device has become an important problem to be solved.

In view of the above, an objective of the invention is to provide a separable build-in mouse input device, which combines the touch pad, the touch stick, or the track ball of a portable computer, shares the functions of its buttons and/or rollers, and is an independent input device.

To achieve the above-mention objective, the separable build-in mouse input device according to the invention includes an information processing apparatus and a mouse input device, which are signally connected together for inputting information. The information processing apparatus includes a radio frequency receiver for receiving a radio frequency signal transmitted from the separable mouse input device, a system embedded controller for controlling the switch of power of the radio frequency receiver, and a mouse sensing module using the ground of the mouse input device as a detection signal for the system embedded controller to judge if the mouse input device is removed. The mouse input device includes a radio frequency transmitter for transmitting the information of the mouse controller via the radio frequency signal, a power supply unit for providing power to the mouse input device when the mouse input device is removed from the information processing apparatus, and a power control circuit for detecting the ground of the information processing apparatus to judge whether the mouse input device is removed, and switches the power of the mouse input device.

Further embodiments of the invention are laid down in claims 1 to 12.

According to one aspect of the invention, the radio frequency signal may be transmitted via radio frequency using ISM (Industry - Science - Medical) frequency band of 2.4 GHz.

According to another aspect of the invention, the information processing apparatus may further include a mouse battery charger for providing power to the mouse input device and charges the mouse input device. The mouse battery charger may stop charging the separable mouse input device when the main battery of the information processing apparatus is at a low-power status and the information processing apparatus uses its main battery as the only power source.

According to still another aspect of the invention, the first connecting unit and the second connecting unit may be of spring-type design or slot-type design.

According to still another aspect of the invention, the input module may be a touch pad, a track ball, or a track stick module. The information processing apparatus might be a portable computer, a tablet PC, an electronic satchel, an electronic book, or a web pad.

These and other features, aspects and advantages of the invention will become better understood with regard to the following description and accompanying drawings.
- FIG. 1: is a block diagram showing the architecture of the portable computer and the separable mouse input device according an embodiment of the present invention.
- FIG. 2: is a schematic diagram showing the separable mouse input device according the embodiment of the present invention.
- FIG. 3A: is a flowchart showing the operation of the separable mouse input device when being removed from the portable computer.
- FIG. 3B: is a flowchart showing the operation of the separable mouse input device when being removed from the portable computer.

The separable mouse input device according to an embodiment of the invention will be described with reference to the accompanying drawings, wherein the same reference numbers denote the same elements.

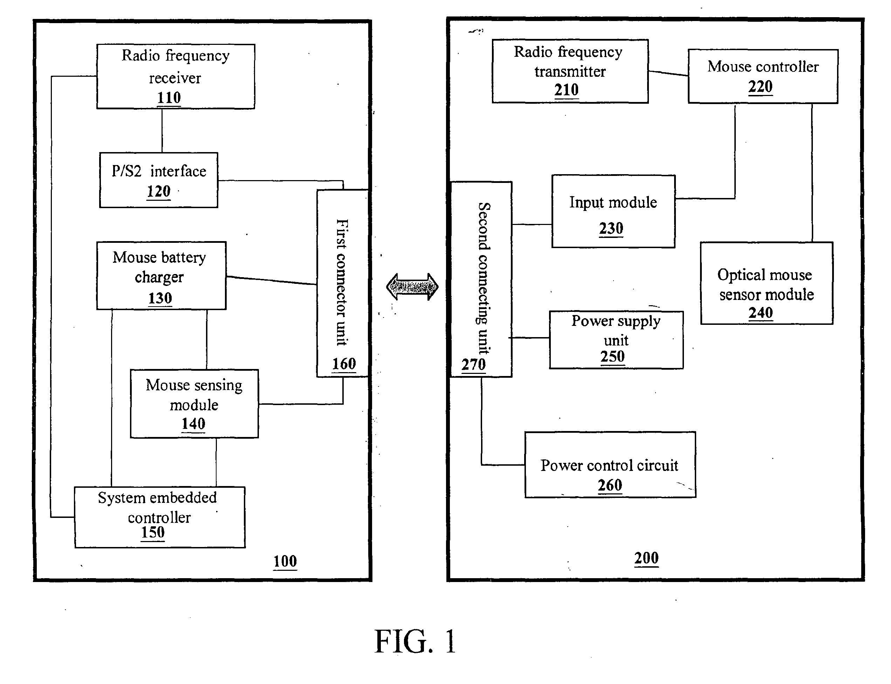

Referring to FIG. 1, the separable mouse input device 200 according to an embodiment of the present invention is implemented in a portable computer 100. The portable computer 100 and the separable mouse input device 200 are connected together for a user to input information. However, it should be noted that the invention is not limited to portable computers, and can be implemented in various kinds of electronic information processing apparatus, such as Tablet PCs, electronic satchels, electronic books, and Web Pads.

The portable computer 100 includes a radio frequency receiver 110, a P/S2 interface 120, a mouse battery charger 130, a mouse sensing module 140, a system embedded controller 150, and a first connector unit 160. The separable mouse input device 200 includes a radio frequency transmitter 210, a mouse controller 220, an input module 230, an optical mouse sensor module 240, a power supply unit 250, a power control circuit 260, and a second connecting unit 270. Below are detailed descriptions of the components mentioned above.

The radio frequency receiver 110 receives the radio frequency signal transmitted from the separable mouse input device 200. When receiving the radio frequency signal, the radio frequency receiver 110 issues a command signal. In the present embodiment, the radio frequency signal is transmitted via radio frequency, and uses the ISM (Industry Science Medical) frequency band of 2.4 GHz.

The mouse battery charger 130 provides power to and charges the separable mouse input device 200 when the portable computer 100 is connected to the separable mouse input device 200. In the present embodiment, the mouse battery charger 130 stops charging the separable mouse input device 200 when the main battery of the portable computer 100 is at a low-power status and the portable computer 100 uses its main battery as the only power source.

The P/S2 interface 120 transmits the data received by the radio frequency receiver 110 to the portable computer 100 to process the data received.

The system embedded controller 150 is a built-in control circuit for controlling the P/S2 interface 120, the mouse battery charger 130, and the switch of the power of the radio frequency receiver 110.

The mouse sensing module 140 detects the ground of the separable mouse input device 200, and sends the detection result to the system embedded controller 150 to judge if the separable mouse input device 200 is removed.

The first connecting unit 160 is for connecting with the separable mouse input device 200, and can use a spring-type design or a slot-type design.

The radio frequency transmitter 210 transmits the information of the mouse controller 220 via radio frequency signals. In the present embodiment, the radio frequency signal is transmitted via radio frequency, and uses the ISM (Industry-Science-Medical) frequency band of 2.4 GHz.

The mouse controller 220 includes the button of the mouse, the roller, and the X/Y axes motion-coding controller.

The input module 230 is a standard build-in input device of the portable computer, which connects to the P/S2 interface 120 of the portable computer 100 via the first connecting unit 160. The input module 230 may be a touch pad, a track ball or a track stick module.

The optical mouse sensor module 240 calculates the X/Y axes displacement vectors using the optical image displacements, and provides the same to the mouse controller 220. In the present embodiment, the optical mouse sensor module 240 includes a light emitting diode, a refraction plate, and an image displacement control circuit.

The power supply unit 250 provides power to the separable mouse input device 200 when the separable mouse input device 200 is removed from the portable computer 100.

The power control circuit 260 detects the ground of the portable computer 100 to judge whether the separable mouse input device 200 is removed, and switches the power of the separable mouse input device 200.

The second connecting unit 270 is for connecting with the first connecting unit 160, and can use a spring-type design or a slot-type design.

It should be noted that in the present embodiment, the portable computer 100 and the separable mouse input device 200 could operate independently. When operating independently, the separable mouse input device 200 transmits the control signals input by the user to the portable computer 100. It should also be noted that while the present embodiment uses a portable computer as an example, the invention is suitable for other electronic information processing apparatus, such as a tablet PC, an electronic book, an electronic satchel, a web pad, or a PDA.

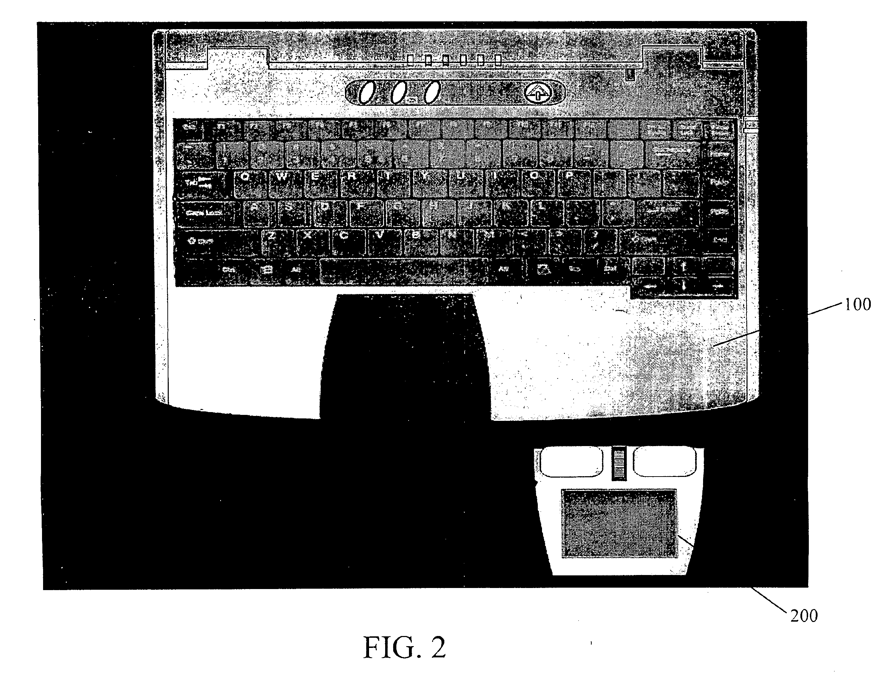

FIG. 2 is a schematic diagram of the separable mouse input device according to the embodiment of the present invention. Referring to FIG. 2, the separable mouse input device can be combined with, for example, conventional touch pad, as an independent module. This independent module can combine with a portable computer using a spring-type or a knife-type connector. When combined with a portable computer, only the touch pad and the buttons are exposed. When the independent module is removed from the portable computer, the touch pad is inactivated, and the wireless mouse function is activated to make the independent module a wireless mouse. Using this design, the user does not have to bring an extra mouse when he/she wants to use a mouse instead of a touch pad.

According to the present embodiment, the separable mouse input device 200 is stored in the portable computer 100. The input module 230, which may be a touch pad, a track ball, or a track stick, connects to the P/S2 interface 120 using the second connector 270, and is the main input device of the portable computer 100. Except for charging the power supply unit 250 according to its volume, other units of the separable mouse input device 200 are under an inactive status.

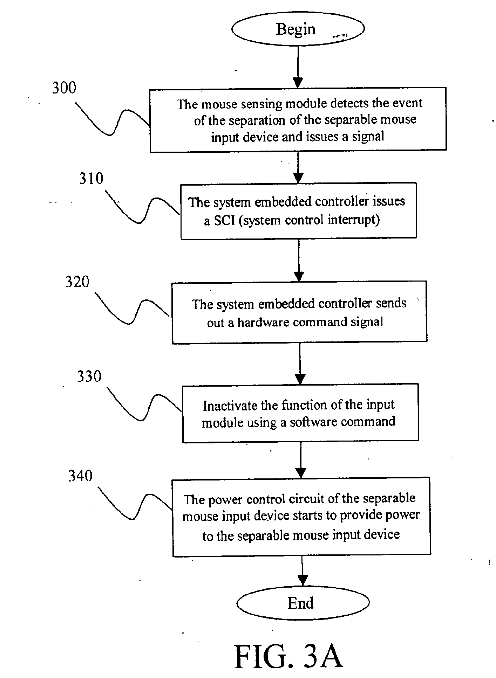

FIG. 3A is a flowchart showing the operation of the separable mouse input device 200 when being removed from the portable computer 100. Referring to FIG. 3A, when the separable mouse input device 200 is separated from the portable computer 100, the mouse sensing module140 detects the event of the removal of the separable mouse input device 200 and issues a signal (step 300). This signal requests the system embedded controller 150 to issue a SCI (system control interrupt) (step 310). A SCI may make a mouse driver to switch the left/right buttons of the mouse. The system embedded controller 150 then sends out a hardware command signal (step 320), which turns on the power of the radio frequency receiver 110 to activate its function, and a software command to inactivate the function of the input module 230 (step 330). The power control circuit 260 of the separable mouse input device 200 starts to provide power to the separable mouse input device 200 (step 340).

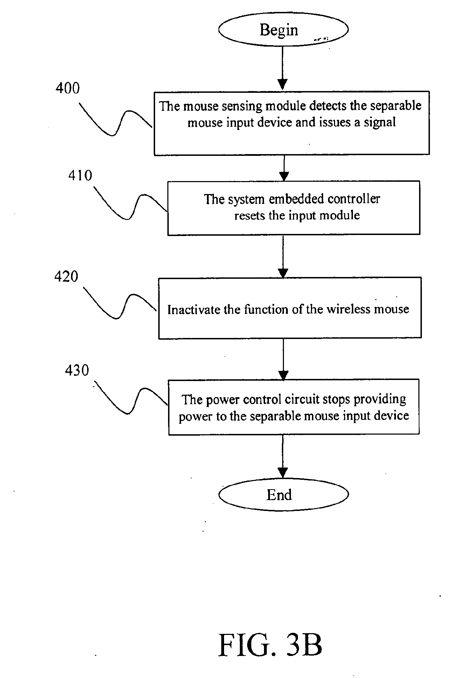

FIG. 3B is a flowchart showing the operation of the separable mouse input device 200 when being combined with the portable computer 100. Referring to FIG. 3B, when the separable mouse input device 200 is combined with the portable computer 100 under a power-on status, the mouse sensing module 140 detects the separable mouse input device 200 and issues a signal (step 400). The signal is for requesting the system embedded controller 150 to reset the input module 230 (step 410), such as a touch pad, a track ball, or a track stick, and for inactivate the function of the wireless mouse. The power control circuit 260 stops providing power to the separable mouse input device 200.

If the separable mouse input device 200 is removed from the portable computer 100 when the portable computer 100 is at a power-on status, then it functions as an external wireless mouse. When separated from the portable computer, the separable mouse input device 200 may act as an optical wireless mouse transmitting information via radio frequency.

The portable computer 100 may reserve space for the separable mouse input device 200, and the separable mouse input device 200 features in that it shares the same touch pad and the buttons of other device controlling the mouse cursor.

The portable computer 100 and the separable mouse input device 200 connect with each other using the first connect unit 160 and the second connecting unit 270. When the separable mouse input device 200 is removed from the portable computer 100, the space left in the portable computer 100 can be hidden using suitable mechanical design. Alternatively, the portable computer 100 may be left as it is without any modification in view of its esthetics and utility design.

Generally, the basic idea of the invention resides in a system of a separable build-in mouse input device and an information processing apparatus, e.g. a portable computer which are signally connected with each other for inputting information, wherein the information processing apparatus comprises: a mouse battery charger for providing power to the mouse input device and charges the mouse input device when the portable computer is connected to the mouse input device; a mouse sensing module for detecting a ground of the mouse input device and sending the detection result to the system embedded controller to judge if the mouse input device is removed; and a first connecting unit for connecting the mouse input device; and wherein the mouse input device comprises: a power supply unit for providing power to the mouse input device when the mouse input device is removed from the portable computer; a power control circuit for detecting the ground of the portable computer to judge whether the mouse input device is removed, and switches the power of the mouse input device; and a second connecting unit for connecting the first connecting unit, wherein the portable computer and the mouse input device can operate independently. The system may in addition comprise the above described features.

While the invention has been described with reference to a preferred embodiment, this description is not intended to be construed in a limiting sense. Various modifications of the embodiment will be apparent to persons skilled in the art upon reference to the description. It is therefore intended that the appended claims encompass any such modifications.

## Claims

1. A separable build-in mouse input device, which refers to a portable computer and a mouse input device signally connecting together for inputting information, comprising:
said portable computer, including:
- a radio frequency receiver for receiving a radio frequency signal transmitted from the separable mouse input device and issuing a command signal when receiving the radio frequency signal;
- a mouse battery charger for providing power to the mouse input device and charges the mouse input device when the portable computer is connected to the mouse input device;
- a P/S2 interface for transmitting the information received by the radio frequency receiver to the portable computer to process the information received;
- a system embedded controller for controlling the P/S2 interface, the mouse battery charger, and the switch of power of the radio frequency receiver;
- a mouse sensing module for detecting a ground of the mouse input device and sending the detection result to the system embedded controller to judge if the mouse input device is removed; and
- a first connecting unit for connecting the mouse input device; and
said mouse input device, comprising:
- a mouse controller, including a button, a roller, and a X/Y axes motion-coding controller;
- a radio frequency transmitter for transmitting the information of the mouse controller via the radio frequency signal;
- an input module being a standard build-in input device of the portable computer, which connects to the P/S2 interface of the portable computer via the first connecting unit;
- an optical mouse sensor module for calculating X/Y axes displacement vectors using optical image displacements, and providing the X/Y axes displacement vectors to the mouse controller;
- a power supply unit for providing power to the mouse input device when the mouse input device is removed from the portable computer;
- a power control circuit for detecting the ground of the portable computer to judge whether the mouse input device is removed, and switches the power of the mouse input device; and
- a second connecting unit for connecting the first connecting unit,
wherein the portable computer and the mouse input device can operate independently.

2. Separable build-in mouse input device according to claim 1, wherein the radio frequency signal is transmitted via radio frequency using ISM (Industry-Science-Medical) frequency band of 2.4 GHz.

3. Separable build-in mouse input device according to claim 1 or 2, wherein the mouse battery charger stops charging the separable mouse input device when the main battery of the portable computer is at a low-power status and the portable computer uses its main battery as the only power source.

4. Separable build-in mouse input device according to one of claims 1 to 3, wherein the first connecting unit and the second connecting unit are of spring-type design.

5. Separable build-in mouse input device according to one of claims 1 to 4, wherein the first connecting unit and the second connecting unit are of slot-type design.

6. Separable build-in mouse input device according to one of claims 1 to 5, wherein the input module is selected from the group consisting of a touch pad, a track ball, and a track stick module.

7. Separable build-in mouse input device according to one of claims 1 to 6, wherein the optical mouse sensor module includes a light emitting diode, a refraction plate, and an image displacement control circuit.

8. A mouse input device, which implements wireless transmission technology to transmit a control signal of a user to an information processing apparatus, the mouse input device comprising:
- a mouse controller, including a button, a roller, and a X/Y axes motion-coding controller;
- a radio frequency transmitter for transmitting the information of the mouse controller via the radio frequency signal;
- an input module being a standard build-in input device of the information processing apparatus;
- an optical mouse sensor module for calculating X/Y axes displacement vectors using optical image displacements, and providing the X/Y axes displacement vectors to the mouse controller;
- a power supply unit for providing power to the mouse input device; and
- a power control circuit for detecting the ground of the information processing apparatus to judge whether the mouse input device is removed, and switches the power of the mouse input device.

9. Mouse input device according to claim 8, wherein the radio frequency signal is transmitted via radio frequency using ISM frequency band of 2.4 GHz.

10. Mouse input device according to claim 8 or 9, wherein the input module is selected from the group consisting of a touch pad, a track ball, and a track stick module.

11. Mouse input device according to one of claims 8 to 10, wherein the optical mouse sensor module includes a light emitting diode, a refraction plate, and an image displacement control circuit.

12. Mouse input device according to one of claims 8 to 11, wherein the information processing apparatus is selected from the group consisting of a portable computer, a tablet PC, an electronic satchel, an electronic book, and a web pad.
